(19) Europäisches Patentamt
European Patent Office
Office européen des brevets

(11) **EP 1 843 028 B1**

(12) **EUROPÄISCHE PATENTSCHRIFT**

(45) Veröffentlichungstag und Bekanntmachung des Hinweises auf die Patenterteilung:
**02.01.2019   Patentblatt 2019/01**

(51) Int Cl.:
*F02D 41/20* (2006.01)      *F02D 41/22* (2006.01)
*F02M 47/02* (2006.01)      *F02M 63/02* (2006.01)
*F02M 65/00* (2006.01)

(21) Anmeldenummer: **07105298.9**

(22) Anmeldetag: **30.03.2007**

(54) **Verfahren zur Leckageprüfung eines ein Magnetventil aufweisenden Kraftstoffinjektors**

Method for leakage testing of a fuel injector comprising a solenoid valve

Procédé de contrôle de fuites d'un injecteur de carburant comprenant une soupape magnétique

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **07.04.2006   DE 102006016443**

(43) Veröffentlichungstag der Anmeldung:
**10.10.2007   Patentblatt 2007/41**

(73) Patentinhaber: **ROBERT BOSCH GMBH**
**70442 Stuttgart (DE)**

(72) Erfinder:
• **Etzold, Peter**
**73061 Ebersbach (DE)**
• **Goeser, Joachim**
**73072 Donzdorf (DE)**
• **Khalidi, Yassir**
**73734 Esslingen (DE)**

(56) Entgegenhaltungen:
EP-A1- 1 577 527      DE-A1- 10 309 609
DE-A1- 10 321 503      DE-A1- 19 841 533
DE-A1-102004 055 575

EP 1 843 028 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Leckageprüfung eines ein Magnetventil aufweisenden Kraftstoffinjektors, insbesondere für eine Brennkraftmaschine, durch Ermittlung mindestens einer temperaturabhängigen Messgröße, mit der die Temperatur mindestens eines Teils des Kraftstoffinjektors ermittelt wird, wobei eine Erhöhung der Temperatur eine erhöhte Leckage anzeigt.

**Stand der Technik**

Ein Verfahren der eingangs genannten Art ist bekannt. Bei einem Kraftstoffversorgungssystem einer Brennkraftmaschine wird Kraftstoff mit Hilfe einer Kraftstoffpumpe aus einem Kraftstoffbehälter gefördert und über Kraftstoffleitungen mindestens einem Kraftstoffinjektor zugeführt, der den Kraftstoff in einen Brennraum der Brennkraftmaschine einspritzt. Überschüssiger Kraftstoff gelangt üblicherweise über eine Rücklaufleitung in den Kraftstoffbehälter zurück. Bei Brennkraftmaschinen mit Hochdruckeinspritzung, insbesondere bei Brennkraftmaschinen mit Selbstzündung, schließt sich an die Kraftstoffpumpe eine weitere Pumpe an, die einen sehr hohen Druck erzeugt. An einem entsprechenden Hochdruck-Leitungsbereich, der auch als Rail bezeichnet wird, ist auch der Injektor mit seinem Zulauf angeschlossen. Ein Kraftstoffrücklauf des Kraftstoffinjektors ist mit einem Niederdruck-Leitungsbereich des Kraftstoffversorgungssystems verbunden. Bei solchen Kraftstoffversorgungssystemen besteht die Gefahr eines Lecks des Kraftstoffinjektors, sodass Kraftstoff in die Rücklaufleitung gelangt. Dies wird üblicherweise als innere Leckage bezeichnet. Darüber hinaus ist auch eine Leckage nach außen möglich, bei der Kraftstoff unter hohem Druck in den Motorraum gelangt. Eine erhöhte Leckage des Kraftstoffinjektors führt zu einer bleibenden Abweichung des Raildrucks. Dies kann zu einem Defekt der Brennkraftmaschine führen. Um dies zu vermeiden, gibt es Verfahren zur Leckageprüfung des Kraftstoffinjektors, die die empirisch gefundene Erkenntnis ausnutzen, dass eine Leckage den Kraftstoffinjektor einschließlich seiner Anbauteile stark aufheizt. Diese Temperaturänderung wird mittels einer temperaturabhängigen Messgröße erfasst, die die Temperatur wenigstens eines Teils des Kraftstoffinjektors charakterisiert, um hieraus auf das Vorhandensein eines Lecks zu schließen. Dazu wird zum Beispiel ein Temperatursensor wie zum Beispiel ein temperaturabhängiger Widerstand an entsprechender Stelle im Kraftstoffinjektor angebracht.

Aus der nachveröffentlichten europäischen Patentanmeldung EP 1 815 120 A1 ist es außerdem bekannt, die Temperatur einer Magnetspule eines Magnetventils über das Tastverhältnis einer Haltestromregelung zu Bestimmen.

**Offenbarung der Erfindung**

**Technische Aufgabe**

Zur Ermittlung einer Leckage über eine Temperaturänderung soll ein Verfahren geschaffen werden, das eine quasi-kontinuierliche Messung der Zeitkonstante ermöglicht und/oder eine hohe Messgenauigkeit für die Zeitkonstante und damit für die Temperaturmessung erreicht.

**Technische Lösung**

Zur Lösung dieser Aufgabe ist vorgesehen, dass die Zeitkonstante aus der Differenz des nacheinander aufgenommenen ersten Zeitintervalls und zweiten Zeitintervalls bestimmt wird. Ist eine Bestimmung der Zeitkonstante aus der Messung des direkt aufeinanderfolgend aufgenommenen ersten und zweiten Zeitintervalls möglich, so kann die Zeitkonstante quasi-kontinuierlich über den Zeitraum der konstanten Stromregelung gemessen werden. Alternativ oder zusätzlich wird die Zeitkonstante aus der Differenz der gemittelten ersten Zeitintervalle und gemittelten zweiten Zeitintervalle bestimmt. Durch die Mittelung über mehrere erste Zeitintervalle und zweite Zeitintervalle wird die Messgenauigkeit für die Zeitkonstante und damit für die Temperaturmessung erhöht. Durch Analyse des Stromverlaufs - zum Beispiel bei einem Spannungssprung mit vorgegebener Betriebsspannung lässt sich bei einer Magnetspule die Zeitkonstante L/R ermitteln. Da die Induktivität L der Spule temperaturunabhängig und der Widerstand R der Spule temperaturabhängig ist, ist auch die Zeitkonstante eine temperaturabhängige Messgröße. Wird die Versorgungsspannung insbesondere sprunghaft geändert, so kann die Zeitkonstante direkt aus dem Stromverlauf abgelesen werden. Bei Kraftstoffinjektoren der eingangs genannten Art ist die Magnetspule zwischen dem Hochdruckbereich des Kraftstoffinjektors und dem Rücklauf angeordnet, sodass eine innere Leckage über den Stromverlauf an der Magnetspule detektiert werden kann.

**Vorteilhafte Wirkungen**

Insbesondere ist vorgesehen, dass vorhandene Anschlüsse der Magnetspule genutzt werden können. Da die Magnetspule nach außen kontaktiert ist, werden keine zusätzlichen Leitungen benötigt.

Weiterhin ist vorgesehen, dass die Ermittlung der Zeitkonstante während des Betriebs des Kraftstoffinjektors möglich ist. Im Betrieb ergeben sich Zeitintervalle, in denen die Betriebsspannung geändert wird, sodass sich ein Stromverlauf des Stroms in der Magnetspule ergibt, aus dem die Zeitkonstante bestimmt werden kann.

Nach einer Weiterbildung der Erfindung ist vorgesehen, dass sich der Stromverlauf aus einer Stromregelung für die Magnetspule ergibt. Eine solche Stromregelung ist für den Betrieb des Kraftstoffinjektors bereits vorhanden, um das Magnetventil präzise betätigen zu können. Eine entsprechende Regelung sorgt zum Beispiel dafür, dass das Magnetventil in einer vorgegebenen Zeit von einem geschlossenen Zustand in einen geöffneten Zustand oder von einem geöffneten Zustand in einen geschlossenen Zustand überführt wird.

Insbesondere ist vorgesehen, dass die Stromregelung eine Konstantstromregelung ist. Bei einer Konstantstromregelung wird der Strom durch die Magnetspule auf einen konstanten Sollwert eingeregelt, sodass der Stromverlauf nach einer Einregelzeit nur wenig um diesen Sollwert variiert. Eine Bestimmung der Temperatur bei konstantem oder nahezu konstantem Strom hat den Vorteil, dass eine Temperaturänderung durch Änderung des elektrischen Stroms selbst nicht berücksichtigt werden muss.

Zusätzlich ist vorgesehen, dass die Konstantstromregelung einen oberen und einen unteren Schwellenstrom aufweist. Der obere und der untere Schwellenstrom geben an, in welchem Strombereich Abweichungen eines Istwerts des Stromverlaufs toleriert werden.

Nach einer Weiterbildung der Erfindung ist vorgesehen, dass die Konstantstromregelung eine Zweipunktregelung ist. Bei einer Realisierung der Konstantstromregelung als Zweipunktregelung wird die an die Magnetspule angelegte Spannung zum Beispiel so geschaltet, dass die volle Betriebsspannung angelegt ist, bis der Stromverlauf den oberen Schwellenstrom erreicht hat und dass anschließend so lange keine Spannung angelegt wird, bis der Stromverlauf auf den unteren Schwellenstrom abgesunken ist. Bei einem derartigen Schalten der angelegten Spannung an der Magnetspule ergibt sich ein Stromverlauf, der abwechselnd exponentiell ansteigend und abfallend ist.

Insbesondere ist vorgesehen, dass die beiden Schwellenströme größer als 50 % eines Sättigungsstroms sind, der bei angelegter Betriebsspannung im stationären Fall durch die Magnetspule fließt. Bei derartig gewählten Schwellenströmen ergibt sich ein Stromverlauf, der es ermöglicht, die Zeitkonstante aus möglichst wenigen Regelschwingungen der Stromregelung zu bestimmen.

Nach einer Weiterbildung der Erfindung ist vorgesehen, dass aus den Schaltzeiten der Betriebsspannung bei der Zweipunktregelung auf das erste Zeitintervall und das zweite Zeitintervall geschlossen werden kann. Da die an der Magnetspule anliegende Spannung zum Beispiel entweder der vollen Betriebsspannung entspricht, wenn der Stromverlauf die obere Schwelle noch nicht erreicht hat und dieser kontinuierlich ansteigt oder keine Spannung anliegt, wenn der Stromverlauf kontinuierlich abfällt bis der untere Schwellenstrom erreicht ist, ergeben sich aus den Schaltzeiten der Betriebsspannung das erste Zeitintervall und das zweite Zeitintervall. Aus beiden Zeitintervallen kann die Zeitkonstante der Spule bestimmt werden.

Zusätzlich wird eine Mess-/Prüfvorrichtung zur Durchführung eines Verfahrens zur Leckageprüfung beansprucht.

## Kurze Beschreibung der Zeichnungen

Die Zeichnungen veranschaulichen die Erfindung anhand eines Ausführungsbeispiels, und zwar zeigt:

Figur 1   eine Schnittdarstellung eines Kraftstoffinjektors mit Magnetventil,

Figur 2   einen Ausschnitt des in Figur 1 gezeigten Kraftstoffinjektors im Bereich des Magnetventils,

Figur 3   einen Spannungsverlauf und einen Stromverlauf an einer Magnetspule des Magnetventils und

Figur 4   einen Ausschnitt aus Figur 3, der den Spannungsverlauf und den Stromverlauf bei einer als Zweipunktregelung realisierten Konstantstromregelung zeigt.

## Ausführungsform der Erfindung

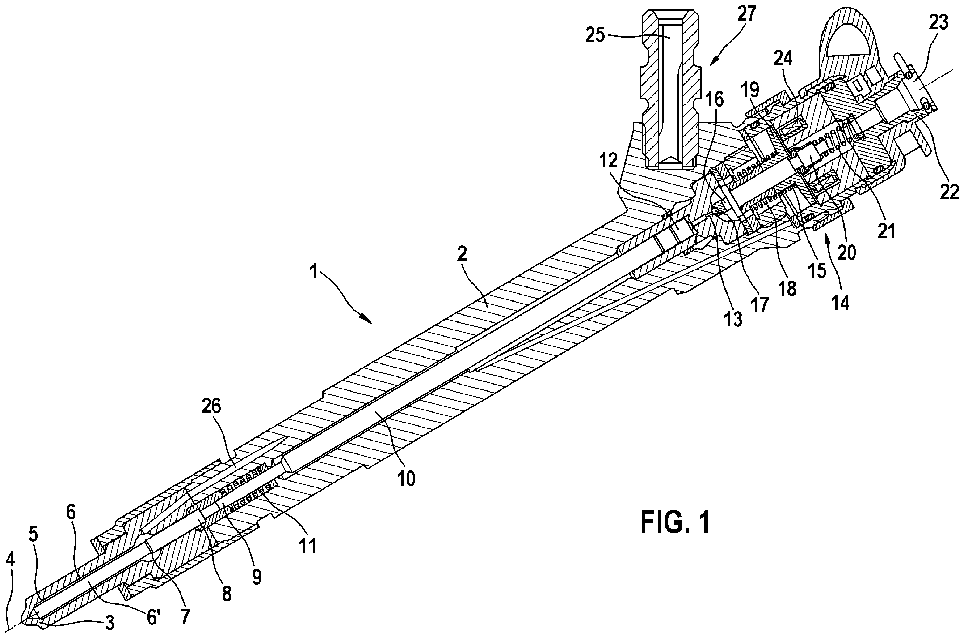

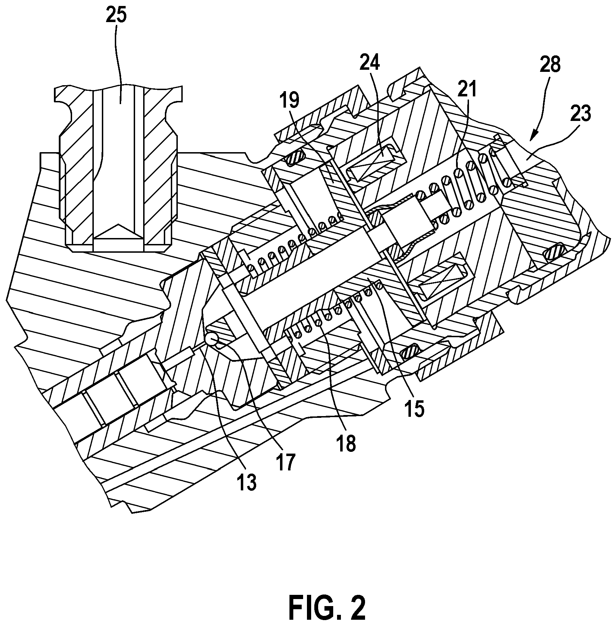

Die Figur 1 zeigt einen Kraftstoffinjektor 1 mit Injektorkörper 2. Ein Endbereich 3 des Kraftstoffinjektors 1 ist im eingebauten Zustand einem nicht dargestellten Brennraum eines nicht dargestellten Zylinders zugewandt. Innerhalb des Injektorkörpers 2 befindet sich im Endbereich 3 mindestens ein nicht dargestelltes Einspritzloch, durch das der Kraftstoff in den Brennraum eingespritzt wird. Unmittelbar hinter dem Einspritzloch befindet sich auf der Längsachse 4 ein Ende 5 einer Einspritzdüse 6 mit einer Düsennadel 6', die eine Druckschulter 7 aufweist. An ein dem Ende 5 gegenüberliegenden Ende 8 der Einspritzdüse 6 schließt sich ein Ende 9 eines Ventilkolbens 10 an, das von einer Düsenfeder 11 umfasst wird. An einem dem Ende 9 gegenüberliegenden Ende 12 des Ventilkolbens 10 findet sich ein nicht dargestellter Ventilsteuerraum, an den sich eine Ablaufdrossel 13 anschließt. Auf der dem Ventilkolben 10 und dem Ventilsteuerraum gegenüberliegenden Seite der Ablaufdrossel 13 befindet sich ein Magnetventil 14 des Kraftstoffinjektors 1. Das Magnetventil 14 besteht aus einem Magnetanker 15, an dessen einem Ende 16 sich eine Ventilkugel 17 befindet, die der Ablaufdrossel 13 zugewandt ist und diese verschließen kann. Der Magnetanker 15 wird von einer ersten Ventilfeder 18 umfasst, die sich am Injektorkörper 2 und einer Ringschulter 19 des Magnetankers 15 abstützt. Ein dem Ende 16 des Magnetankers 15 gegenüberliegendes Ende 20 wird über eine zweite Ventilfeder 21 gegen den Injektorkörper 2 in einem dem Endbereich 3 gegenüberliegender Endbereich 22 des Kraftstoffinjektors 1 vorgespannt. Am Endbereich 22 befindet sich der Kraftstoffrücklauf 23, über den Kraftstoff zurück in einen nicht dargestellten Niederdruckleitungsbereich zurückgeführt werden kann. Die zweite Ventilfeder 21 ist ringförmig von einer Magnetspule 24 umgeben, die über nicht dargestellte Anschlussleitungen mit einer nicht darstellten Steuereinheit verbunden ist. Seitlich an dem Injektorkörper 2 befindet sich auf Höhe der Ablaufdrossel 13 ein Hochdruckanschluss 25, der über eine nicht dargestellte Zulaufdrossel mit dem Ventilsteuerraum und über einen Hochdruckzulaufkanal 26 mit dem Hochdruckbereich 27 der Einspritzdüse 5 verbunden ist. Die Figur 2 zeigt einen Niederdruckbereich 28 des in Figur 1 dargestellten Kraftstoffinjektors 1 mit dem Magnetventil 14 im Detail.

Es ergibt sich folgende Funktion des Kraftstoffinjektors 1. Der Kraftstoff wird von einer nicht dargestellten Kraftstoffhochdruckquelle, bei einem Common-Rail-System zum Beispiel einer Kraftstoffhochdruckpumpe und einem Hochdruckspeicher, über den Hochdruckanschluss 25 zu der Einspritzdüse 6, sowie über die Zulaufdrossel in den Ventilsteuerraum geführt. Der Ventilsteuerraum ist über die Ablaufdrossel 13 mit dem Niederdruckbereich 28 und dem Magnetventil 14 verbunden. Im geschlossenen Zustand der Ablaufdrossel 13 überwiegt die hydraulische Kraft auf den Ventilkolben 10 gegenüber der Kraft auf die Druckschulter 7 der Düsennadel 6'. Infolgedessen wird die Düsennadel 6' in ihren Sitz gepresst und schließt den Hochdruckzulaufkanal 26 dicht zum nicht dargestellten Motorraum ab. Bei nicht laufendem Motor und fehlendem Druck im Hochdruckspeicher schließt die Düsenfeder 11 den Kraftstoffinjektor 1. Fließt ein hinreichend großer elektrischer Strom durch die Magnetspule 24, so öffnet das Magnetventil 14, wobei die Ventilkugel 17 von der Ablaufdrossel 13 abgehoben wird. Die Zulaufdrossel verhindert einen vollständigen Druckausgleich, sodass der Druck im Ventilsteuerraum und damit die hydraulische Kraft auf den Ventilkolben 10 sinkt. Sobald die hydraulische Kraft die auf die Druckschulter 7 der Düsennadel 6' wirkenden Kraft unterschreitet, öffnet die Einspritzdüse 6 und der Kraftstoff gelangt durch das Spritzloch in den Brennraum des Motors. Fließt kein Strom durch die Magnetspule 24, so wird der Magnetanker 15 durch die Kraft der zweiten Ventilfeder in Richtung der Ablaufdrossel 13 gedrückt, sodass die Ventilkugel 17 diese verschließt. Dadurch baut sich im Ventilsteuerraum über den Zufluss der Zulaufdrossel wieder ein Druck auf, der den Druck der Krafthochdruckquelle entspricht. Dieser größere Druck übt eine höhere Kraft auf den Ventilkolben 10 aus, sodass die Düsennadel 6' wieder schließt. Der Durchfluss der Zulaufdrossel bestimmt dabei die Schließgeschwindigkeit der Düsennadel 6'.

Kommt es zu einer zusätzlichen Leckage, so wird der Injektorkörper 2 einschließlich seiner Anbauteile aufgrund des sich im Niederdruckbereich 28 entspannenden Kraftstoffs stark erwärmt. Dabei heizt der aufgeheizte Kraftstoff den im Niederdruckbereich 28 angeordneten Magnetanker 15 und die Magnetspule 24 auf. Aus der Temperatur der Magnetspule 24 kann damit auf ein Leck zurückgeschlossen werden.

Wird der Kraftstoffinjektor 1 geöffnet, um Kraftstoff in den Brennraum einzuspritzen, so fließt zunächst ein relativ hoher Strom I um den Magnetanker 15 zu bewegen. Anschließend wird der Strom I durch die Magnetspule 24 mittels einer Konstantstromregelung auf einen konstanten Wert eingeregelt, um den Kraftstoffinjektor 1 geöffnet zu halten. Diese Stromregelung kann genutzt werden, um über eine Zeitkonstante $\tau$ (mit $\tau = L/R$) auf die Temperatur und die Temperaturänderung der Magnetspule 24 zu schließen. Während die Induktivität L temperaturunabhängig ist, ist der Widerstand R der Spule temperaturabhängig. Damit ist auch die Zeitkonstante $\tau$ der Magnetspule 24 temperaturabhängig.

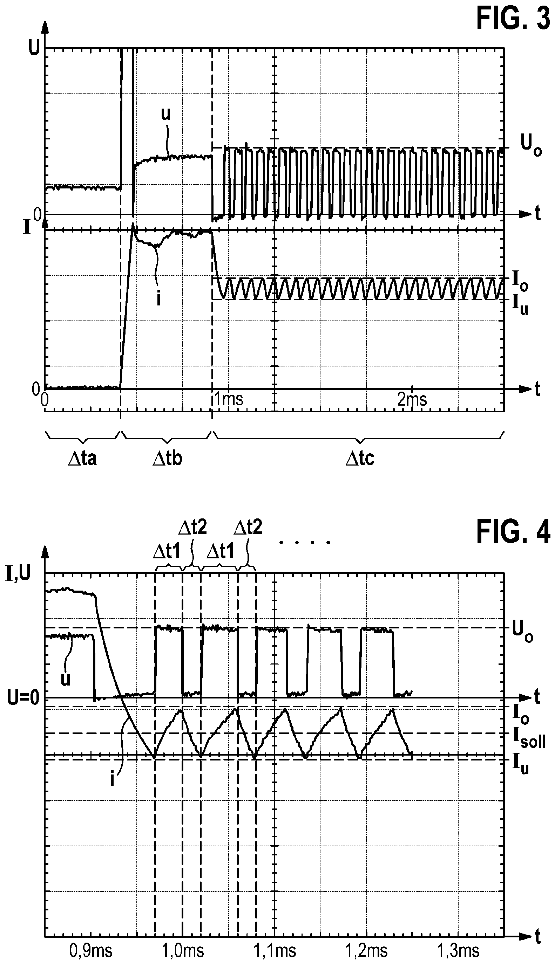

Figur 3 zeigt den Spannungsverlauf u und den Stromverlauf i an der Anschlussleitung der Magnetspule 24 über der Zeit t. Der dargestellte Zeitbereich lässt sich dabei in drei Zeitabschnitte $\Delta ta$, $\Delta tb$, $\Delta tc$ aufteilen: Im ersten Zeitbereich $\Delta ta$ schließt das Magnetventil 14 die Ablaufdrossel 13, wobei kein Strom I durch die Magnetspule 24 fließt. Im zweiten Zeitbereich $\Delta tc$ wird mit einer überhöhten Spannung U ein hoher Strom I eingeregelt (Boosterphase). Der Spannungsverlauf u ist im zweiten Zeitbereich $\Delta tb$ durch einen kurzfristigen Spannungswert gekennzeichnet, der weit über die Darstellung hinausgeht. Der Stromverlauf im dritten Zeitbereich $\Delta tc$, in dem das Magnetventil 14 lediglich offen gehalten werden muss und auch höher als im ersten Zeitbereich $\Delta ta$, da bei geschlossenem Kraftstoffinjektor 1 kein Strom I durch die Magnetspule 24 fließt. Der dritte Zeitbereich $\Delta tc$ ist durch eine als Zweipunktregelung ausgebildete Konstantstromregelung zum Offenhalten des Magnetventils 14 gekennzeichnet. Dabei wird das Magnetventil 14 so betrieben, dass ein annähernd konstanter Strom $I_{soll}$ durch die Magnetspule 24 fließt (Haltestrom). Dazu wird in stetigem Wechsel die Betriebsspannung $U_0$ und die Spannung U = 0 (keine Spannung) an die Magnetspule 24 angelegt. Die Umschaltpunkte im Spannungsverlauf u, das heißt die Zeiten, zu denen von U = 0 auf U = $U_0$ umgeschaltet wird und umgekehrt, ergeben sich immer dann, wenn der Stromverlauf i den oberen Schwellenstrom $I_o$ oder den unteren Schwellenstrom $I_u$ erreicht hat. In einem ersten Zeitintervall $\Delta t1$ steigt der

Stromverlauf i kontinuierlich von dem unteren Schwellenstrom $I_u$ bis auf den oberen Schwellenstrom $I_o$, wobei der Spannungsverlauf u während dieses ersten Zeitintervalls $\Delta t1$ (Anstiegsdauer) konstant bei der Betriebsspannung $U_o$ liegt. Hat der Stromverlauf i den oberen Schwellenstrom $I_o$ erreicht, so reduziert die Regelung die an die Magnetspule 24 angelegte Spannung zu U = 0, wobei der Spannungsverlauf u schlagartig absinkt. Im anschließenden zweiten Zeitintervall $\Delta t2$ (Abfalldauer) sinkt der Stromverlauf i vom oberen Schwellenbereich $I_o$ kontinuierlich auf den unteren Schwellenbereich $I_u$. Während des zweiten Zeitintervalls $\Delta t2$ hat der Spannungsverlauf u den Wert U = 0. Hat der Stromverlauf i das Niveau des unteren Schwellenstroms $I_u$ erreicht, so schließt sich ein weiteres erstes Zeitintervall $\Delta t1$ an (wie

Figur 4 zeigt).

Der Stromverlauf i verläuft im ersten Zeitintervall $\Delta t1$ gemäß:

$$I(t) = I_{max} \cdot (1 - exp(-t/\tau))$$

Im zweiten Zeitabschnitt $\Delta t2$ fällt der Stromverlauf i kontinuierlich gemäß:

$$I(t) = I_{max} \cdot exp(-t/\tau)$$

Bei einem derartigen Stromverlauf i ergibt sich das erste Zeitintervall $\Delta t1$ und das zweite Zeitintervall $\Delta t$, bei der unmittelbar die Zeitkonstante $\tau$ der Magnetspule 24 mit der Induktivität L und dem Widerstand R eingeht. Dabei gilt

$$\Delta t1 = L/R \cdot ln((U_0 - R \cdot I_u)/(U_0 - R \cdot I_o))$$

und

$$\Delta t2 = L/R \cdot ln(I_o/I_u)$$

Die Induktivität L der Magnetspule 24 ändert sich nur wenig mit der Temperatur T. Der Widerstand R erhöht sich jedoch mit steigender Temperatur T. Das erste Zeitintervall wird größer, wenn sich die Temperatur T (und damit der Widerstand R) erhöht, da der Einfluss der Änderung von R im Logarithmus größer ist als im Nenner der Zeitkonstante L/R. Je höher die Schwellenströme $I_u$, $I_o$ im Verhältnis zu einem Sättigungsstrom $I_{max}$ (der bei angelegter Betriebsspannung im stationären Fall durch die Spule fließen würde) sind, desto deutlicher wird die Zunahme von $\Delta t1$ mit der Temperatur. Das zweite Zeitintervall $\Delta t2$ nimmt dagegen ab, wenn sich die Temperatur T (und damit der Widerstand R) erhöht. Die Dauer des zweiten Zeitintervalls $\Delta t2$ ist damit stets proportional zum Kehrwert des Widerstands R. Zudem ist das zweite Zeitintervall unabhängig von der Betriebsspannung $U_0$, was in der Praxis von Vorteil ist.

Steht ein sehr hoher Zähltakt zur Verfügung, so liefert bereits eine Zykluszeit einer Regelschwingung ($\Delta t1 + \Delta t2$) die Zeitkonstante, aus der die Temperatur T bestimmt werden kann. Da der temperaturabhängige Widerstand R im ersten Zeitintervall $\Delta t1$ im Zähler und im zweiten Zeitintervall $\Delta t2$ im Nenner des Quotienten in den Gleichungen für $\Delta t1$ und $\Delta t2$ eingeht, liefert eine Differenz ($\Delta t1 - \Delta t2$) des ersten Zeitintervalls $\Delta t1$ und des zweiten Zeitintervalls $\Delta t2$ das beste Signal, da sich die Temperatureffekte addieren. Bei niedrigem Zähltakt reicht die zeitliche Auflösung zur Bestimmung der Dauer des ersten Zeitintervalls $\Delta t1$ und des zweiten Zeitintervalls $\Delta t2$ nicht aus. In diesem Fall muss die Zykluszeit einer Regelschwingung über mehrere Perioden der Regelschwingung vermessen werden. In Verbindung mit Schwellenströmen $I_u$, $I_o$, die deutlich über 50 % des Sättigungsstroms $I_{max}$ liegen, liefert eine solche Mittelung gute Ergebnisse.

**Patentansprüche**

1. Verfahren zur Leckageprüfung eines ein Magnetventil aufweisenden Kraftstoffinjektors, insbesondere für eine Brennkraftmaschine, durch Ermittlung mindestens einer temperaturabhängigen Messgröße, mit der die Temperatur mindestens eines Teils des Kraftstoffinjektors ermittelt wird, wobei eine Erhöhung der Temperatur eine erhöhte Leckage anzeigt, wobei die Messgröße eine Zeitkonstante ($\tau$) ist, die aus einem Stromverlauf (i) eines Stroms (I) durch eine Magnetspule (24) des Magnetventils (14) bestimmt wird, wobei der Stromverlauf (i) mindestens ein erstes Zeitintervall ($\Delta t1$) aufweist, in dem er kontinuierlich ansteigt, und mindestens ein zweites Zeitintervall ($\Delta t2$), in dem er kontinuierlich abfällt, **dadurch gekennzeichnet, dass** die Zeitkonstante ($\tau$) aus der Differenz des ersten Zeitintervalls ($\Delta t1$) und des zweiten Zeitintervalls ($\Delta t2$) und/oder aus der Differenz von gemittelten ersten Zeitintervallen und gemittelten zweiten Zeitintervallen bestimmt wird.

2. Verfahren nach Anspruch 1, **dadurch gekennzeichnet, dass** vorhandene Anschlüsse der Magnetspule (14) genutzt werden.

3. Verfahren nach einem der vorhergehenden Ansprüche, **dadurch gekennzeichnet, dass** die Ermittlung der Zeitkonstante ($\tau$) während des Betriebs des Kraftstoffinjektors (1) möglich ist.

4. Verfahren nach einem der vorhergehenden Ansprüche, **dadurch gekennzeichnet, dass** sich der Stromverlauf (i) aus einer Stromregelung für die Magnetspule (24) ergibt.

5. Verfahren nach einem der vorhergehenden Ansprüche, **dadurch gekennzeichnet, dass** die Stromregelung eine Konstantstromregelung ist.

6. Verfahren nach einem der vorhergehenden Ansprüche, **dadurch gekennzeichnet, dass** die Konstantstromregelung einen oberen Schwellenstrom ($I_o$) und einen unteren Schwellenstrom ($I_u$) aufweist.

7. Verfahren nach einem der vorhergehenden Ansprüche, **dadurch gekennzeichnet, dass** die Konstantstromregelung eine Zweipunktregelung ist.

8. Verfahren nach einem der vorhergehenden Ansprüche, **dadurch gekennzeichnet, dass** die beiden

Schwellenströme ($I_o$, $I_u$) größer als 50 % eines Sättigungsstroms ($I_{max}$) sind, der bei einer angelegten Betriebsspannung ($U_0$) im stationären Fall durch die Magnetspule (24) fließt.

9. Verfahren nach einem der vorhergehenden Ansprüche, **dadurch gekennzeichnet, dass** aus den Schaltzeiten der Betriebsspannung ($U_0$) bei der Stromregelung auf das erste Zeitintervall ($\Delta t1$) und das zweite Zeitintervall ($\Delta t2$) geschlossen werden kann.

10. Mess-/Prüfvorrichtung zur Durchführung eines Verfahrens nach einem der Ansprüche 1 bis 9.

**Claims**

1. Method for leakage testing a fuel injector comprising a solenoid valve, in particular for an internal combustion engine, by acquiring at least one temperature-dependent measurement variable with which the temperature of at least part of the fuel injector is acquired, wherein an increase in the temperature indicates increased leakage, wherein the measurement variable is a time constant ($\tau$) which is determined from a current profile (i) of a current (I) from a solenoid (24) of the solenoid valve (14), wherein the current profile (i) has at least one first time interval ($\Delta t1$) in which said current profile (i) rises continuously, and at least one second time interval ($\Delta t2$) in which it drops continuously, **characterized in that** the time constant ($\tau$) is determined from the difference between the first time interval ($\Delta t1$) and the second time interval ($\Delta t2$) and/or from the difference between averaged first time intervals and averaged second time intervals.

2. Method according to Claim 1, **characterized in that** connections of the solenoid (14) which are present are used.

3. Method according to one of the preceding claims, **characterized in that** the acquisition of the time constant ($\tau$) is possible during the operation of the fuel injector (1).

4. Method according to one of the preceding claims, **characterized in that** the current profile (i) results from a current control process for the solenoid (24).

5. Method according to one of the preceding claims, **characterized in that** the current control process is a constant current control process.

6. Method according to one of the preceding claims, **characterized in that** the constant current control process has an upper threshold current ($I_o$) and a lower threshold current ($I_u$).

7. Method according to one of the preceding claims, **characterized in that** the constant current control process is a two-point control process.

8. Method according to one of the preceding claims, **characterized in that** the two threshold values ($I_o$, $I_u$) are higher than 50% of a saturation current ($I_{max}$) which flows in the steady-state case through the solenoid (24) when an operating voltage ($U_0$) is applied.

9. Method according to one of the preceding claims, **characterized in that** the first time interval ($\Delta t1$) and the second time interval ($\Delta t2$) can be inferred from the switching times of the operating voltage ($U_0$) during the current control process.

10. Measuring/testing device for carrying out a method according to one of Claims 1 to 9.

**Revendications**

1. Procédé de contrôle de fuites d'un injecteur de carburant présentant une électrovanne, en particulier pour un moteur à combustion interne, par détermination d'au moins une grandeur de mesure dépendant de la température, avec laquelle la température d'au moins une partie de l'injecteur de carburant est déterminée, une augmentation de la température indiquant une augmentation des fuites, la grandeur de mesure étant une constante de temps ($\tau$) qui est déterminée à partir de l'allure du courant (i) d'un courant (I) à travers une bobine magnétique (24) de l'électrovanne (14), l'allure du courant (i) présentant au moins un premier intervalle de temps ($\Delta t1$) dans lequel il augmente en continu, et au moins un deuxième intervalle de temps ($\Delta t2$) dans lequel il chute en continu, **caractérisé en ce que** la constante de temps ($\tau$) est déterminée à partir de la différence entre le premier intervalle de temps ($\Delta t1$) et le deuxième intervalle de temps ($\Delta t2$) et/ou à partir de la différence entre le premier intervalle de temps moyenne et le deuxième intervalle de temps moyenné.

2. Procédé selon la revendication 1, **caractérisé en ce que** les raccords existants de l'électrovanne (14) sont utilisés.

3. Procédé selon l'une quelconque des revendications précédentes, **caractérisé en ce que** la détermination de la constante de temps ($\tau$) peut s'effectuer pendant le fonctionnement de l'injecteur de carburant (1).

4. Procédé selon l'une quelconque des revendications précédentes, **caractérisé en ce que** l'allure du courant (i) s'obtient à partir d'une régulation du courant pour la bobine magnétique (24).

5. Procédé selon l'une quelconque des revendications précédentes, **caractérisé en ce que** la régulation du courant est une régulation de courant constante.

6. Procédé selon l'une quelconque des revendications précédentes, **caractérisé en ce que** la régulation de courant constante présente un courant de seuil supérieur ($I_o$) et un courant de seuil inférieur ($I_u$).

7. Procédé selon l'une quelconque des revendications précédentes, **caractérisé en ce que** la régulation de courant constante est une régulation à deux points.

8. Procédé selon l'une quelconque des revendications précédentes, **caractérisé en ce que** les deux courants de seuil ($I_o$, $I_u$) sont supérieurs à 50 % d'un courant de saturation ($I_{max}$) qui s'écoule à travers la bobine magnétique (24) lors de l'application d'une tension de fonctionnement ($U_0$) à l'état stationnaire.

9. Procédé selon l'une quelconque des revendications précédentes, **caractérisé en ce qu'**à partir des temps de commutation de la tension de fonctionnement ($U_0$) lors de la régulation du courant, on peut déduire le premier intervalle de temps ($\Delta t1$) et le deuxième intervalle de temps ($\Delta t2$).

10. Dispositif de mesure/contrôle pour mettre en oeuvre un procédé selon l'une quelconque des revendications 1 à 9.

FIG. 1

EP 1 843 028 B1

**FIG. 2**

EP 1 843 028 B1

# FIG. 3

# FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1815120 A1